# EUROPEAN PATENT SPECIFICATION

(11) **EP 4 740 077 B1**
(45) Date of publication and mention of the grant of the patent: **04.11.2026**
(21) Application number: 23739496.0
(22) Date of filing: 05.07.2023
(51) Int. Cl.: G05D 1/65, G05D 1/622

(54) **CONFIGURING AUTONOMOUS DEVICE SAFETY AREAS**
KONFIGURATION VON SICHERHEITSBEREICHEN AUTONOMER VORRICHTUNGEN
CONFIGURATION DE ZONES DE SÉCURITÉ DE DISPOSITIF AUTONOME

(43) Date of publication of application: 13.05.2026
(73) Proprietor: Telefonaktiebolaget LM Ericsson (publ), 164 83 Stockholm (SE)
(72) Inventor: MIKSITS, Adam, 164 80 Stockholm (SE); BARBOSA, Fernando dos Santos, 164 80 Stockholm (SE); LINDHÉ, Magnus, 164 83 Stockholm (SE); ARAÚJO, José, 164 83 Stockholm (SE); JOHANSSON, Karl Henrik, 181 61 Lidingö (SE)
(74) Representative: Ericsson
(86) International application number: PCT/EP2023/068536
(87) International publication number: WO 2025/008057

(56) References cited:
- US-A1- 2020 111 375
- ZHU XIAOMIN ET AL: "Velocity Obstacle Based on Vertical Ellipse for Multi-Robot Collision Avoidance", JOURNAL OF INTELLIGENT, SPRINGER NETHERLANDS, DORDRECHT, vol. 99, no. 1, 7 March 2020 (2020-03-07), pages 183 - 208, XP037177603, ISSN: 0921-0296, [retrieved on 20200307], DOI: 10.1007/S10846-019-01127-6
- KHARE ISHAAN ET AL: "Probabilistic Inverse Velocity Obstacle for Free Flying Quadrotors", 2021 EUROPEAN CONTROL CONFERENCE (ECC), EUCA, 29 June 2021 (2021-06-29), pages 1711 - 1718, XP033994263, DOI: 10.23919/ECC54610.2021.9655130

## Description

### TECHNICAL FIELD

The present disclosure relates to a method of navigating an autonomous device, an autonomous device, a corresponding computer program, and a corresponding computer program product.

### BACKGROUND

For autonomous devices such as robots, vehicles, drones, etc., motion-planning and navigation is a complex process, and avoiding collisions with obstacles is a key requirement of any autonomous device.

When navigating, a distance and a gradient to obstacles must be determined by the autonomous device in order to avoid collisions with the obstacles. This is commonly performed using a so-called Euclidean distance function (EDF) or a signed distance function (SDF).

However, these functions have discontinuities in positions that are equally distant from two or more points. Assuming, for instance, that the autonomous device is a robot navigating a corridor where the only two obstacles are a right-hand wall and a left-hand wall defining the corridor, as soon as the robot passes over a longitudinal centreline of the corridor, e.g., from a first position at the left-hand wall towards a second position at the right-hand wall, the gradient towards the closest obstacle changes instantly (the closest obstacle changing from the left-hand wall to the right hand-wall when the centreline is crossed).This results in a discontinuous change in the gradient, and the only safe option is to limit the velocity of the robot in all directions, which unfortunately may lead to a deadlock if the robot finds itself too close to an obstacle.

Zhu, X., Yi, J., Ding, H. et al., "Velocity Obstacle Based on Vertical Ellipse for Multi-Robot Collision Avoidance", J. Intell. Robot Syst. 99, pages 183-208, Springer, 2020, discloses Bounding volume based approaches in velocity obstacle (VO) which provide a good solution for collision avoidance of mobile robots with uncertainty. However, the VO built with the bounding footprint always has over-constraining problems which may lead to conservative maneuvers of the mobile robots. Addressing this problem, a vertical ellipse based velocity obstacle (VEVO) collision avoidance method is proposed. The method mitigates the over-constraining situation by building the footprint probability ellipse whose minor axis is vertical to the direction of the obstacle to minimize the VO area. Based on VEVO, a DWA (Dynamic Window Approach) integrated method is proposed to provide a set of available velocities in speed selection. According to different collision avoidance objectives like collision safety, shortest time consumption and shortest trajectory length, a multi-objective velocity selecting strategy is proposed to provide optimal velocities for motion planning. Furthermore, a dynamic local path adjustment method is proposed to help robots react to the closest obstacle (dynamic or static) according to different collision safety requirements. Experimental results show VEVO method could improve the collision avoidance performance in crowded multi-robot environment and robots could achieve their different objectives when suitable parameters are set in the velocity evaluation function. The proposed dynamic local path adjustment method only affects the trajectories in local areas and could ensure collision avoidance safety and performance at the same time.

I. Khare, J. Poonganam, B. Gopalakrishnan and K. M. Krishna, "Probabilistic Inverse Velocity Obstacle for Free Flying Quadrotors", 2021 European Control Conference (ECC), pages 1711-1718, IEEE, 2021, reports Probabilistic Inverse Velocity Obstacle (PIVO) as an alternative to probabilistic versions of Velocity Obstacles (PVO) for free flying quadrotor systems. Inverse Velocity Obstacles compute effective controls from a sequence of observations on other agents without the need to access ego state information. As a direct consequence of this the ego state noise is not entailed in probabilistic formulations bringing in verifiable advantages in the form of reduced path lengths, less conservative maneuvers, reduced occurrences of stopping/hovering to let others pass. The efficacy of PIVO as an alternative to probabilistic versions of Velocity Obstacles is showcased. In particular, the benefits of PIVO over PVO in relation to sample complexity as well as overall trajectory lengths are shown, as well as the efficacy of the proposed probabilistic formulation in handling non-parametric and often multimodal noise distributions.

US 2020/111375 A1 discloses a method including determining data indicating velocity uncertainty, relative position uncertainty, or both, associated with an aircraft and a navigation hazard. The method also includes determining a set of bounding vectors based on the data and determining a plurality of candidate intersection points that together correspond to circular or spherical regions defined by the set of bounding vectors. The method also includes identifying a region of interest based on a projected intersection of the aircraft or the navigation hazard with a candidate intersection point and generating a situational awareness display based on the region of interest.

### SUMMARY

One objective is to solve, or at least mitigate, this problem in the art and to provide improved solutions for navigating an autonomous device.

This objective is attained in a first aspect by a method of navigating an autonomous device. The method comprises determining a positioning uncertainty area of the autonomous device with respect to an estimated current position of the autonomous device. The method further comprises defining test points at positions in the positioning uncertainty area, and selecting a circular safety area centered at each test point. The circular safety areas form a barrier around the positioning uncertainty area. The method further comprises determining, for each test point, a distance and a gradient from a closest obstacle towards said each test point. The method further comprises determining, for each test point a set of safe velocities with which the autonomous device is allowed to move without an obstacle entering the safety area of said each test point. The set of safe velocities is determined, for each test point, based on the determined distance and the determined gradient. The method further comprises selecting a safe velocity within an intersection of the sets of safe velocities, determined for all test points. The selected safe velocity is a velocity with which the autonomous device is allowed to move.

This objective is attained in a second aspect by an autonomous device. The autonomous device comprises a sensor for detecting obstacles, a processing unit, and a memory. Said memory contains instructions executable by said processing unit. The autonomous device is thus operative to determine a positioning uncertainty area of the autonomous device with respect to an estimated current position of the autonomous device. The autonomous device is further operative to define test points at positions in the positioning uncertainty area, and select a circular safety area centered at each test point. The circular safety areas form a barrier around the positioning uncertainty area. The autonomous device is further operative to determine, for each test point, a distance and a gradient from a closest obstacle towards said each test point. The autonomous device is further operative to determine, for each test point, a set of safe velocities with which the autonomous device is allowed to move without an obstacle entering the safety area of said each test point. The set of safe velocities is determined, for each test point, based on the determined distance and the determined gradient. The autonomous device is further operative to select a safe velocity within an intersection of the sets of safe velocities, determined for all test points. The selected safe velocity is a velocity with which the autonomous device is allowed to move.

Advantageously, in the safety areas formed around the test points, obstacles are not allowed to enter upon the autonomous device navigating an area. This has the effect that the safety areas create a barrier around the autonomous device.

In an embodiment, the determining, for each test point, of a distance and a gradient from a closest obstacle towards said each test point comprises deducting, from the computed distance to the closest obstacle, a selected safety distance forming a radius of the safety area of said each test point.

In an embodiment, the same safety distance is selected for all test points.

In an embodiment, the safety distance is selected such that a boundary of any of the safety areas touches a boundary of any adjacent safety area.

In an embodiment, the safety distance is selected such that a boundary of any of the safety areas is separated from a boundary of any adjacent safety area by a gap.

In an embodiment, the safety distance is selected such that said gap is smaller than a width of a narrowest obstacle in an area through which the autonomous device navigates.

In an embodiment, the safety distance is selected such that said gap is equal to a width of a narrowest obstacle detectable by one or more sensors of the autonomous device and/or representable in a map utilized by the autonomous device for navigation.

In an embodiment, for each test point, a smaller safety distance is selected for a test point closer to an obstacle while a greater safety distance is selected for a test point further away from an obstacle.

In an embodiment, the smaller safety distance and the greater safety distance are selected such that a boundary of any of the safety areas touches a boundary of any adjacent safety area.

In an embodiment, the smaller safety distance and the greater safety distance are selected such that a boundary of any of the safety areas is separated from a boundary of any adjacent safety area by a gap.

In an embodiment, any determined safe set of velocities for a test point which includes the intersection of all other safe sets of velocities is omitted in determining the sets of safe velocities.

In an embodiment, the selecting of a safe velocity with which the autonomous device is allowed to move comprises selecting, within the intersection of the sets of safe velocities determined for all test points, the velocity that is closest to a velocity with which the autonomous device is requested to move.

In an embodiment, the test points are located at a boundary of the positioning uncertainty area.

In a third aspect, a computer program is provided comprising computer-executable instructions for causing an autonomous device of the second aspect to perform the method of the first aspect when the computer-executable instructions are executed on a processing unit included in the autonomous device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates an autonomous device navigating in an area containing obstacles in the form of a left wall and a right wall, in accordance with embodiments;
Figures 2a-c illustrate different shapes of positioning uncertainty areas which may be used in embodiments;
Figure 3 illustrates forming safety areas to create a safety barrier according to an embodiment;
Figure 4 shows a flowchart illustrating a method of navigating an autonomous device according to an embodiment;
Figure 5 illustrates determining sets of safe velocities for two test points;
Figure 6 illustrates a further embodiment where a safety distance of each test point is selected such that a gap is formed between boundaries of any adjacent safety areas;
Figure 7 illustrates forming safety areas to create a safety barrier according to an embodiment;
Figure 8 illustrates another embodiment where a safety distance of each test point is selected such that a gap is formed between boundaries of any adjacent safety areas;
Figure 9 illustrates forming different-sized safety areas to create a safety barrier according to an embodiment;
Figure 10 illustrates a further embodiment, according to which a safety distance of each test point is selected such that a gap is formed between boundaries of any adjacent safety areas; and
Figure 11 illustrates an autonomous device according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Typically, navigation for autonomous devices such as robotic devices, vehicles, and drones, assumes that the device position is known. There are standard methods for planning a path for a device to avoid that the device collides with obstacles. In the following the autonomous device will be exemplified in the form of a robot, e.g., a robotic vacuum cleaner or lawn mower, but the disclosure is equally applicable for other types of autonomous devices such as, e.g., self-driving cars.

Generally, navigation for mobile robots assumes a point shaped robot. A well-known approach in the field used for building a map of an area in which the robot moves, and simultaneously computing robot location using the map, is known as simultaneous localization and mapping (SLAM). SLAM takes into account that the estimated robot position is uncertain to some degree, which must be accounted for upon the robot navigating an area containing one or more obstacles.

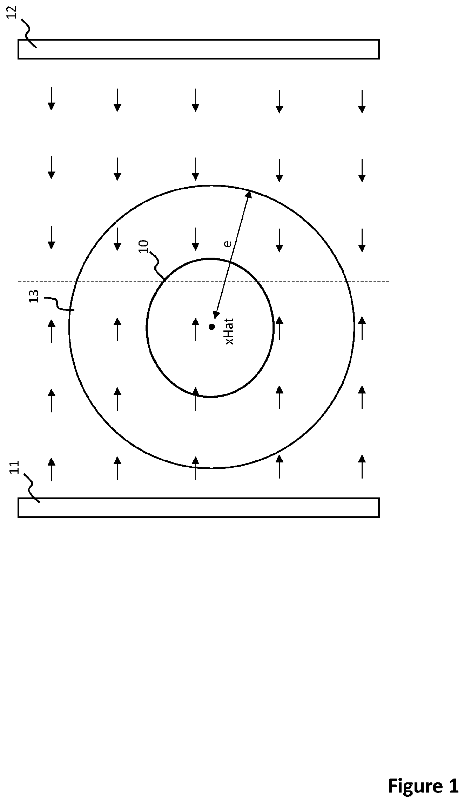

Figure 1 illustrates an estimated position *x̂* of the robot 10 moving through an area containing obstacles in the form of a left wall 11 and a right wall 12. For instance, the robot 10 may be a robotic cleaning device moving in a corridor delimited by the walls 11, 12. As is understood, the area to be cleaned (i.e., the corridor) may comprise numerous obstacles other than the two walls 11, 12 such as furniture, human beings, animals, etc.

In Figure 1, the outer circle with radius e defines an uncertainty area 13 for the positioning of the robot 10. In other words, due to the inevitable uncertainty in robot positioning, the uncertainty area 13 defines all possible positions that the robot 10 may assume within radius e from the estimated robot position xHat. In practice, the size of the uncertainty area 13 may vary depending on, for instance, precision in robot sensors such as gyro, wheel odometry, lidar, etc., and/or area in which the robot 10 moves, e.g., due to slippery floors, the number of unique features in the area to use as landmarks, distance to the features, etc.

As is understood, while Figure 1 illustrates the uncertainly area 13 in the form of a circle, other shapes are envisaged. The shape may depends on a combination of the area in which the robot moves and the robot sensors. In a first example assuming a long corridor, the walls of the corridor may be used to precisely determine the robot's lateral position, but its longitudinal position (i.e., along the corridor) might be less certain because there are no landmarks which can be used for determining the robot's position with higher certainty. In a second example, if there is a considerable slip for the robot wheels, the position uncertainty may increase in the direction that the robot is moving, but to less extent in sideway directions, if a robot gyro is utilized to conclude that the robot is not turning.

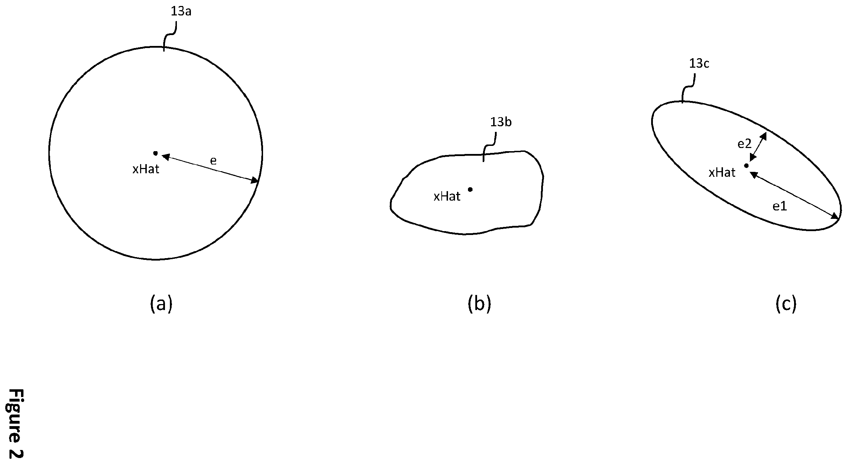

Figures 2a-2c illustrate a circular robot positioning uncertainty area 13a, a freeform positioning uncertainty area 13b, and an elliptic positioning uncertainty area 13c, respectively. In the following, the robotic positioning uncertainty area will be illustrated as having a circular shape.

The arrows in Figure 1 indicate a gradient of a so-called Euclidean distance function (EDF) computed by the robot 10 at various positions. The EDF represents the distance from the robot to the closest point of any obstacle. The illustrated arrows thus show the gradient pointing away from the closest obstacle. In other words, the computed gradient indicates a direction from a nearest obstacle at each robot position. Computation of an EDF is commonly utilized in the field of robot positioning and navigation. The distance may alternatively be determined by computing a so-called signed distance function (SDF).

As shown, the gradient changes direction by 180° at the dashed centre line of the corridor. The gradient indicates the direction in which the robot 10 is to move away from the closest obstacle, and in practice, this means that the gradient at xHat does not contain information regarding a safe direction in which the robot 10 can move, such that all points in the uncertainty area 13 move away from their closest obstacles (i.e., either the left wall 11 or the right wall 12). The only safe option is to limit the velocity in all directions, which unfortunately may lead to a deadlock if the robot 10 finds itself too close to an obstacle.

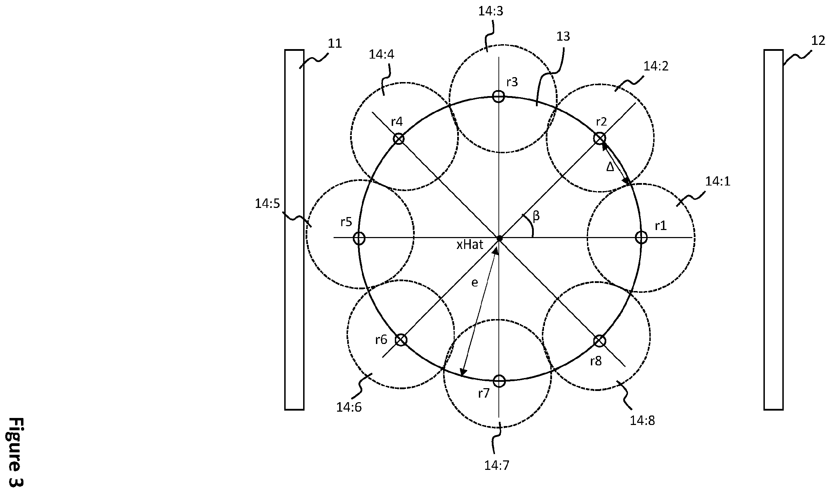

This issue is resolved by an embodiment illustrated with reference to Figure 3. While the robot 10 is illustrated in Figure 1 as having a circular body, the robot 10 will in subsequent drawings only be illustrated by means of its centre point, i.e., its estimated current position xHat.

A circular robot body is commonly assumed, thus having a certain radius. An approach commonly used in the field is to inflate all the obstacles by the robot radius and perform navigation for a point-shaped robot, which is straightforward if the area is described by an SDF. In practice, all the SDF values are decreased by the robot radius. For an EDF, all values outside obstacles are decreased while all values inside obstacles are increased. Effectively, inflating all the obstacles by the robot radius is equivalent to adding the robot radius to the value of the EDF at all points.

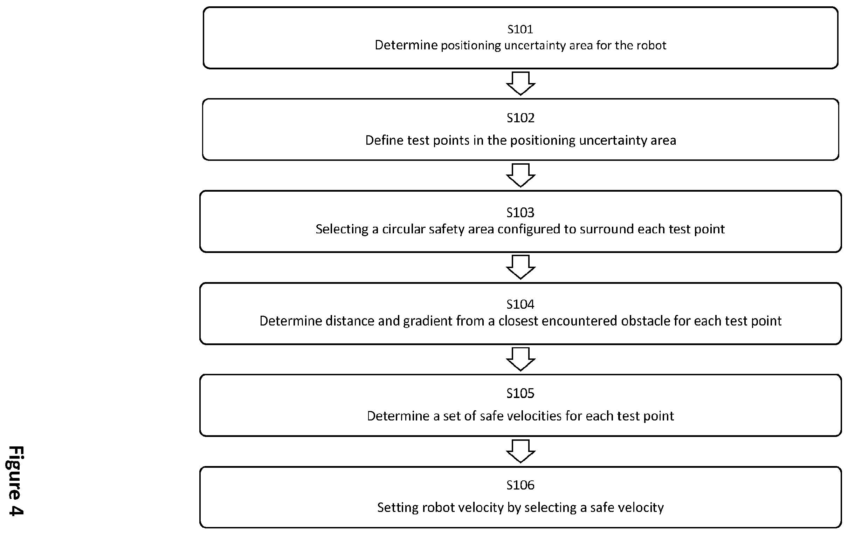

Reference will further be made to the flowchart of Figure 4 illustrating a method of navigating the robot 10 according to this embodiment.

In a first step S101, the robot 10 determines a positioning uncertainty area 13 surrounding the robot 10 with respect to an estimated current robot position xHat. Typically, as mentioned above, the robot 10 uses SLAM for building a map of an area and simultaneously estimating the robot position xHat using the map as the robot moves through the area.

The positioning uncertainty area 13 is commonly estimated utilizing, for instance, a standard Extended Kalman Filter SLAM algorithm to output an estimated distribution of the position error from which a deviation e can be extracted such that the position error is less than e with some certainty, typically between 95% and 99%. For the scenario illustrated in Figure 1, the radius e defines the (circular) uncertainty area 13 for the positioning of the robot 10.

Thus, using the map, the robot 10 estimates its current position xHat. As previously described, the uncertainty area 13 defines all possible positions that the robot 10 may assume within radius e from the estimated robot position xHat, and can be estimated using for instance the Kalman Filter.

Any obstacles may be detected by the robot 10 using one or more sensors such as a radars, lidars, cameras, sonars, etc.

Alternatively, instead of using an estimate of the positioning uncertainty area 13 (and correspondingly its radius e in case of a circular uncertainty area) attained by means of SLAM performed by a processing device of the robot 10, it is possible to use an alternative approach such as a radar, lidar, camera, sonar, or mechanical sensor, to detect the position of specific markers in the area and measure how well their measured position matches the position estimated based on a map, and then estimate the localization uncertainty.

It would also be possible to use sensors that are not onboard the robot, such as a motion capture system, one or more external cameras, lidars, or sonars, to measure the position of the robot and compare it to the position estimated by the robot itself. This could be done during normal operation or during a dedicated calibration sequence, from which statistics of the position error could be derived and used to formulate an uncertainty estimate that is applied during normal operation.

In another example, it is possible to build a computer model of the area and the robot 10 and run simulated executions of the robot 10 driving and localizing itself. Since the robot position would be known in the simulator, statistics of the position estimation error may be derived from such simulations and applied to the physical robot during normal operation.

To conclude, there are numerous ways the robot 10 can estimate its current position xHat and the positioning uncertainty area 13 reflecting the uncertainty in the estimated current position xHat.

In this exemplifying embodiment, the uncertainty area 13 is defined as a circle with radius e around the estimated current robot position xHat. However, as previously mentioned, the uncertainty area 13 may have any shape.

Thereafter, in step S102, the robot 10 defines a plurality of N test points ri at positions in the positioning uncertainty area 13, where i = 1, ... , N. In this particular example, the plurality N of test points ri are located at a boundary of the positioning uncertainty area 13.

In this example, eight (i.e., N = 8) equidistant test points r1-r8 are defined, and the angle between lines drawn from the center point xHat to two adjacent test points will thus be defined as *β* = 2π/*N* (in radians).

With the exemplifying geometry of Figure 3, each test point would be defined relative to xHat as: $ri = xHat + e \left[\begin{matrix}cos \left(\left(i-1\right)β\right) \\ sin \left(\left(i-1\right)β\right)\end{matrix}\right] .$

In step S103, the robot 10 selects a circular safety area 14:i around each test point ri, which circular safety areas 14:i together form a barrier around the positioning uncertainty area 13.

Advantageously, in the safety areas 14:i, obstacles (such as the right wall 11 and the right wall 12) are not allowed to enter upon the robot 10 navigating the area. This has the effect that with the configuration of Figure 4, the eight safety areas 14:1-14:8 create a barrier around the positioning uncertainty area 13.

In this exemplifying embodiment, a safety distance Δ for each safety area i4:i is defined as: $Δ = e ⋅ \sqrt{2} ⋅ \sqrt{1 - cos \frac{β}{2}}$

In other words, the safety distance Δ is the longest distance from any test point ri to any point on the circle of radius e, i.e., to any point of the boundary of the positioning uncertainty area 13 of the robot.

In step S104, the robot 10 determines, for each test point ri, a distance and a gradient from a closest obstacle towards said each test point ri. The safety distance Δ of the circular safety area 14:i of each test point ri is deducted from the computed distance to the closest obstacle.

In other words, upon the robot 10 moving over the area, each test point ri is not allowed to be located at a distance shorter than the safety distance Δ from a closest obstacle. As can be seen in Figure 3, test point r5 is on the verge of being within the safety distance Δ from the left wall 11. That is, the left wall 11 is close to entering the safety area 14:5 of test point r5.

Similar as for the estimation of the current position xHat of the robot 10, the obstacles can be identified from the map with which the robot 10 is provided. Thus, by acquiring information from the stored map, the robot 10 can identify any obstacles 11, 12 and their positions.

In an embodiment, from the map of the area stored by the robot 10, the robot 10 can in step S104 - for any position x where a test point ri is located - search among all obstacles (as defined by their positions in the map in the form of obstacle points) to find the closest obstacle and compute the EDF, denoted d(x), which is the distance between a position x and the closest obstacle point, and the gradient grad_d(x) as a unit vector in the direction from the obstacle point towards x. That is, the computed gradient defines the direction from the closest obstacle point towards position x.

In step S105, the robot 10 determines, at each test point ri, a set of velocities with which the robot 10, based on the computed gradient grad_d(x) and the computed distance d(x) with the safety distance Δ deducted, i.e., d(x) - Δ, can navigate the area without an obstacle entering the circular safety area 14:i of each test point ri. As is understood, the velocity can be represented by a vector in a coordinate system with the same number of dimensions as the robot workspace, i.e., the area in which the robot can move. Typically, the coordinate system is cartesian, but may also be two-dimensional.

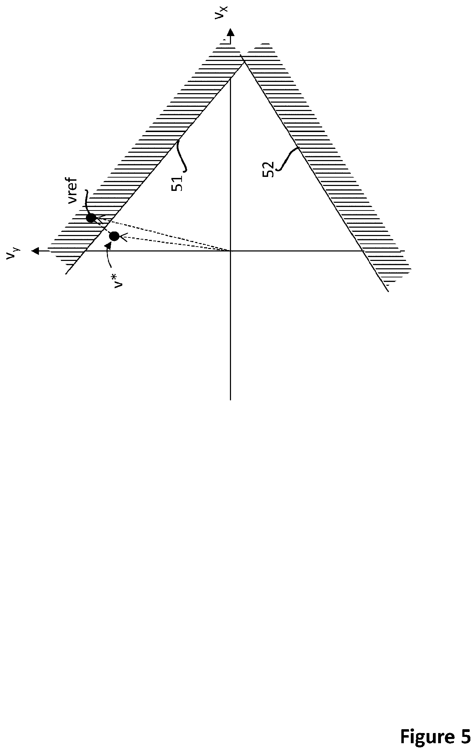

Figure 5 shows a coordinate system illustrating the determining sets of safe velocities for test points r1 and r2. As is understood, given the scenario of Figure 3 with N= 8 test points r1-r8, the illustration would comprise eight velocity sets, one for each test point. The safe set of velocities with respect to all test points would then be the intersection of each of the individual safe sets of velocities. However, for brevity, only the two test points r1 and r2 are illustrated in Figure 5.

In Figure 5, the upper line 51 indicates the half-plane of safe velocities of the robot 10 for test point r1, while the lower line 52 indicates the half-plane of safe velocities of the robot 10 for test point r2. The set of safe velocities for test point r1 is indicated by the non-shaded area below the upper line 51, while the set of safe velocities for test point r2 is indicated by the non-shaded area above the lower line 52. That is, any velocity located in the shaded areas is not a safe velocity.

The set of safe velocities are determined by the condition: $grad_d \left(x\right) * v > - d \left(x\right) ,$ where x = ri for each respective test point.

Finally, in step S106, the robot 10 selects a safe velocity v*, with which the robot 10 is allowed to move, within the intersection of the sets of safe velocities determined for all test points ri, i.e., the non-shaded area between the two lines 51, 52 in Figure 5.

In an embodiment, the safe velocity v* is selected to be closest to a velocity vref with which the robot 10 is requested to move. The request may originate from a controller of the autonomous device 10, such as a so-called trajectory tracker located in a cloud server or other appropriate controller tracking the robot 10, and controlling the robot 10 to follow a planned path, possibly even with a constant velocity vref. The robot 10 may be used e.g., for cleaning, moving an object from a first position to a second position, or for monitoring a building, for instance in order to ascertain that all windows of the building are closed at night-time.

Again with reference to Figure 5, assuming that the requested velocity vref is in the shaded area above the line 51. This is a velocity which is not selected as it does not fulfil the above condition.

Thus, the robot 10 will select the safe velocity v* being closest to the requested velocity vref, which in this example is the determined safe velocity for test point r1.

Advantageously, with the test points ri and the associated circular safety areas 14:i, a safety barrier is formed around the boundary of the positioning uncertainty area 13 of the robot 10, in that the safety distance Δ is selected such that the boundary of any safety area, e.g., 14:5, exactly touches the boundaries of any adjacent safety area, i.e., 14:4 and 14:6.

Further advantageous is that by determining a safe set of velocities for each test point ri, the robot 10 can be allowed to move with the safe velocity v* (out of a total of eight determined sets of safe velocities for the embodiments illustrated in Figure 3) being closest to a requested velocity vref for the robot 10.

As is understood, the process of Figure 4 may be repeated each time the requested robot velocity vref changes. However, it may be that not all of steps S101-S103 are repeated each time vref changes. For example, the findings of steps S101-S103 may be retained over a time period since they do not change frequently, but that the robot 10 proceeds to perform the operations of steps S104-S106 upon vref changing. As is understood, even if vref does not change, the safe velocity v* will periodically be recomputed as long as the robot 10 is moving, potentially by performing the operations of steps S104-S106 while retaining the findings of steps S101-S103.

With reference to the determining, in step S104, of the distance d(x) and the gradient grad_d(x) from an obstacle to the robot 10, this may be performed in that an empty matrix A and an empty column vector b ae initialized, wherein the determined gradient grad_d(x) for each test point ri is added to the matrix A as a new row vector and the determined distance d(x) for each test point ri is added to the vector b as a new element.

Then, and with reference to determining the safe sets of velocities in step S105, a solver such as a so-called CPLEX optimizer may be utilized for solving the quadratic optimization problem: $v * = {argmin}_{v} {\left‖v-vRef\right‖}_{2}^{2} ,$ subject to *Av* > *-b.*

In an embodiment, since the robot 10 has a maximum speed Smax with which it can travel (e.g., being a maximum speed with which a motor of the robot will allow the robot to move), any test point ri that yields a safe set of velocities that includes any velocity with a magnitude (i.e., speed) less than or equal to the maximum speed Smax will not be taken into consideration upon determining the intersection of all safe sets of velocities. If all velocities with speed ≤ Smax are determined to be safe, then such test point ri is redundant and will not be taken into consideration. Furthermore, if, for any test point ri, the corresponding safe set of velocities includes the complete intersection of safe sets of velocities for some other test points, that test point ri is redundant and is not taken into consideration. Intuitively, this means that those other test points together form a stricter condition on the velocity, so as long as that stricter condition is fulfilled, it is ensured that the condition for ri also is fulfilled. This advantageously results in a less processing when determining the sets of safe velocities.

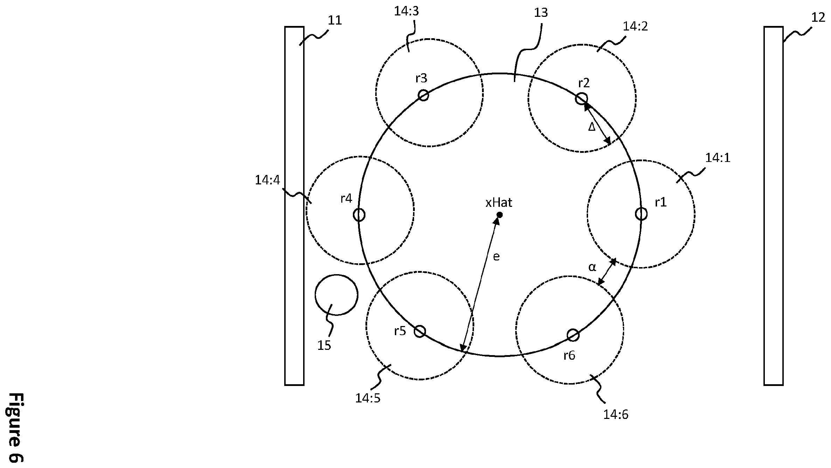

Figure 6 illustrates a further embodiment in which the safety distance Δ of each test point ri is selected such that a gap α is formed between boundaries of any adjacent safety areas 14:i. As shown in Figure 6, the gap α is defined as the closest distance between the boundaries of two adjacent safety areas 14:1, 14:6.

As can be seen in Figure 6, the safety distance Δ of each test point ri is selected to be the same as that in the example of Figure 3, but six test points r1-r6 are illustrated instead of eight test points r1-r8.

For instance, assuming that it is known that obstacles 15 of a certain size are present in an area to be travelled by the robot 10, and that the size of each obstacle is such that an obstacle 15 cannot pass between the safety areas 14:i of two adjacent test points r1 separated by the gap α. If so, such obstacle 15 cannot enter the positioning uncertainty area 13 of the robot 10, and as a consequence cannot collide with the robot 10. Accordingly, in this embodiment, a gap α is present in the barrier formed around the positioning uncertainty area 13.

The embodiment of Figure 6 has the advantage that fewer test points need to be evaluated (i.e., six test points instead of eight), which evaluation may be burdensome in terms of processing resources and power consumption, in particular if the robot 10 is battery powered. However, the possibility of an obstacle entering the positioning uncertainty area 13 of the robot 10 may increase. If it can be ascertained that no obstacle will be encountered that is smaller than the gap α, i.e., even the narrowest obstacle is wider than the gap α, then there is no risk of an obstacle entering the positioning uncertainty area 13 of the robot 10 and the safety distance Δ may indeed be selected such that a gap α is formed, given that the gap is smaller than a size of the narrowest obstacle in an area through which the autonomous device navigates.

In another embodiment, it is assumed that a sensor of the robot 10, such as, e.g., a camera, has technical limitations in terms of, e.g., resolution such that the camera cannot detect obstacles smaller thana certain width, e.g., 10 cm. If so, the gap α may be set equal to a width of the narrowest obstacle which is detectable by the camera, in this example 10 cm.

In a further scenario, assuming that an obstacle smaller than, e.g., 5 cm cannot be represented in the map utilized by the robot 10 when performing SLAM (due to e.g. limitations in the map format), then again the gap α may be set equal to a width of the narrowest representable obstacle, in this example 5 cm, since in this case it is not possible to represent narrower obstacles than that in the map.

Hence, the safety distance Δ may be selected to vary. Generally, the more test points utilized, the more processing is required. However, the safety distance will be smaller which will allow the robot to pass through narrower passages or make tighter turns around corners.

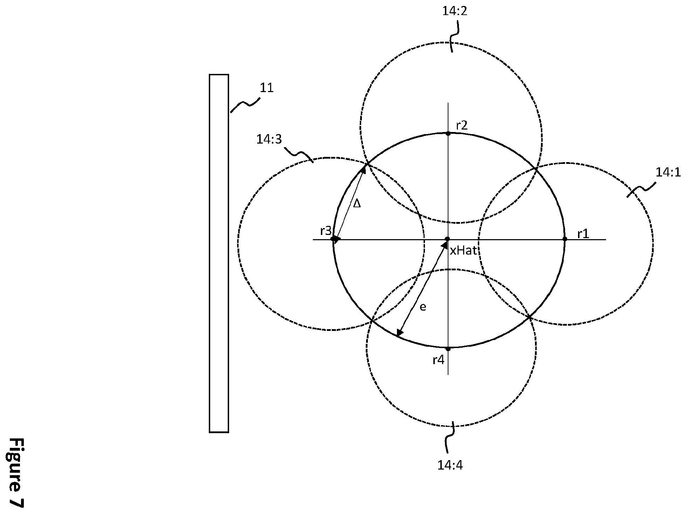

Figure 7 illustrates another embodiment for which, similar to the embodiment described in relation to Figure 3, an uninterrupted safety barrier is formed around the boundary of the positioning uncertainty area 13 (in contrast to the embodiment of Figure 6 where the safety areas 14:i are separated by gaps α).

In Figure 7a, four test points r1-r4 are defined, each with a safety area 14:1-14:4 having a greater safety distance Δ than for the embodiment described in relation to Figure 3 (with the safety areas slightly overlapping).

Thus, as shown in Figures 3, 6 and 7, the selected number of test points ri may vary, as described above, as may their actual placement in the positioning uncertainty area 13, and in particular along the boundary of the positioning uncertainty area 13.

Using circular safety areas 14:1-14:4 having a greater safety distance Δ has the advantage that fewer test points need to be evaluated (e.g., four test points instead of eight when comparing Figure 7 to Figure 3). However, the robot 10 needs to be controlled to maintain a greater distance to obstacles.

The robot 10 will thus slow down earlier upon approaching the closest obstacle 11 for satisfying the condition of step S105 in order to avoid the obstacle 11 entering the safety area 14:3, as illustrated in Figure 7. Further, the robot 10 cannot move closer to the obstacle 11 than the (greater) safety distance Δ.

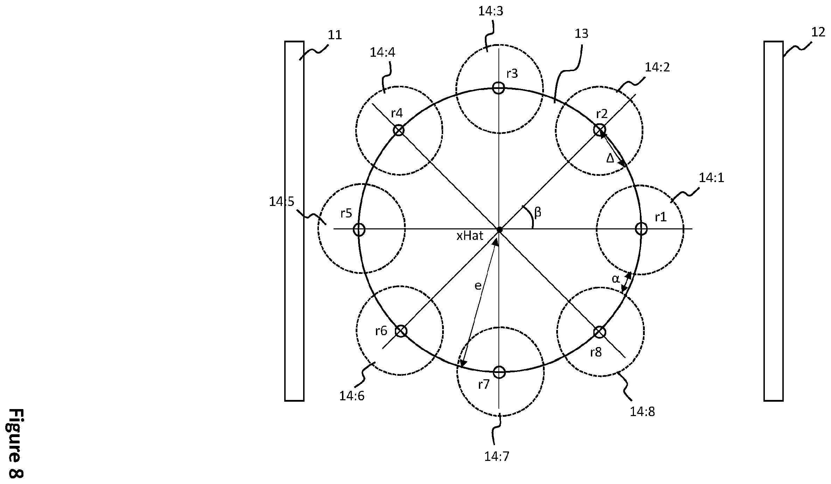

In this respect, with reference to Figure 8, it may be envisaged that eight equidistant test points r1-r8 are defined, each with a smaller safety distance Δ than that illustrated in Figure 3, such that the safety areas 14:1-14:8 are separated by a gap α, as was discussed with reference to Figure 6.

In such scenario, the robot will generally be able to move faster and closer to an obstacle 11 since the safety distance has been decreased, thereby granting the robot 10 a greater freedom of movement. However, any obstacle smaller in size than the gap α may be able to pass in between two adjacent safety areas 14:i and into the positioning uncertainty area 13 of the robot 10, having as a consequence that the robot 10 may collide with the obstacle.

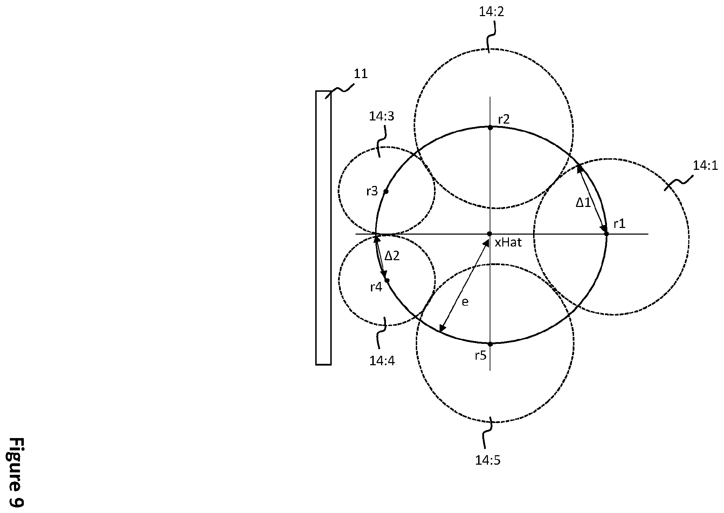

Figure 9 illustrates yet another embodiment, which selects safety areas 14:i of different sizes, i.e., with varying safety distances Δ.

In this embodiment, five test points r1-r5 are defined, where the safety areas 14:1, 14:2 and 14:5 of test points r1, r2 and r5, respectively, are selected to have a first safety distance Δ1, while the safety areas 14:3 and 14:4 of test points r3 and r4 are selected to have a second safety distance Δ2 which is smaller than the first safety distance Δ1.

Thus, a smaller safety distance Δ2 is selected for test points r3, r4 which are closer to an obstacle 11, while a greater safety distance Δ1 is selected for test points r1, r2, r5 further away from the obstacle 11.

This specific configuration is particularly advantageous upon the robot 10 moving in a corridor with only side walls acting as obstacles (only the left side wall 11 is shown in Figure 7) since the robot can move relatively freely when moving forwards or backwards, but is hindered by the wall 11 upon moving sideways.

As shown, the safety distances Δ1 and Δ2 are selected such that the boundary of any safety area, e.g., 14:5, exactly touches the boundary of any adjacent safety area, i.e., 14:4 and 14:6, to form a barrier around the positioning uncertainty area 13.

An approach for selecting varying safety distances Δ will be described mathematically in the following, where the EDF values can be used to increase the density of safety areas 14:3, 14:4 closer to obstacles 11, where it may be important to have a smaller safety distance Δ2.

Let Δi denote the distance from test point ri to any point on the boundary of the positioning uncertainty area 13 that is closer to ri than any other test point. Intuitively, the circle with radius Δi becomes the "coverage area" of ri, as shown in Figure 7. Further, let Smin denote a minimum speed that the robot 10 should be able to maintain. As is understood, the selected minimum speed Smin with which the root 10 should travel depends on the particular circumstances and application of the robot 10.

For each test point ri, the safety distance Δi corresponds to a constraint that can be formulated, similar to what has previously been described, using the EDF d(x) as: $grad_d \left(x\right) * v > - \left[d\left(x\right)-Δi\right] ,$ where x = ri for each respective test point.

If d(ri) - Δi > Smin, or equivalently Δi < d(ri) - Smin, the constraint can always be fulfilled by any speed |v| < Smin. If this applies to all test points ri, it can be avoided that the robot 10 comes to a halt because of conservativeness introduced by using test points ri. However, to avoid excessive computational complexity, a maximum number Nmax of allowed test points can be set.

One way to select varying safety distances Δ, and thus adapt test point density would therefore be the following algorithm (where wrap-around of the test point indices are assumed, i.e., that r0 translates to rN and r(N+1) translates to r1):
1) Start by selecting N (in the example of Figure 7, N= 4) test points, evenly distributed around the positioning uncertainty area 13 as described previously hereinabove,
2) For each test point ri, while N < Nmax:
   2a) Compute Δi as max [|r(i-1) - ri|, |ri - r(i+1)|]/2,
   2b) Compute d(ri),
   2c) If Δi < d(ri) - Smin, continue the iteration with the next test point,
   2d) Replace ri by ri' and ri" (i.e. r3 and r4 in the illustration of Figure 9) equally spaced along the boundary of the positioning uncertainty area 13 between r(i-1) and r(i+1) as illustrated in Figure 9,
   2e) Reenumerate all test points in counterclockwise order and restart the iteration of 2) from r1.
3) Store the positions of the test points ri relative to the current position xHat of the robot 10, e.g., in a table, together with the safety distances Δi.

The adaptive test point generation described through steps 1) - 3) can be executed at regular time intervals that do not necessarily need to coincide with execution intervals of the basic algorithm discussed in detail hereinabove and illustrated in Figure 4.

To use the adaptive test points, step S102 would be modified to retrieve any modified test points ri and safety distances Δi from the table and the method would proceed through steps S103-S106.

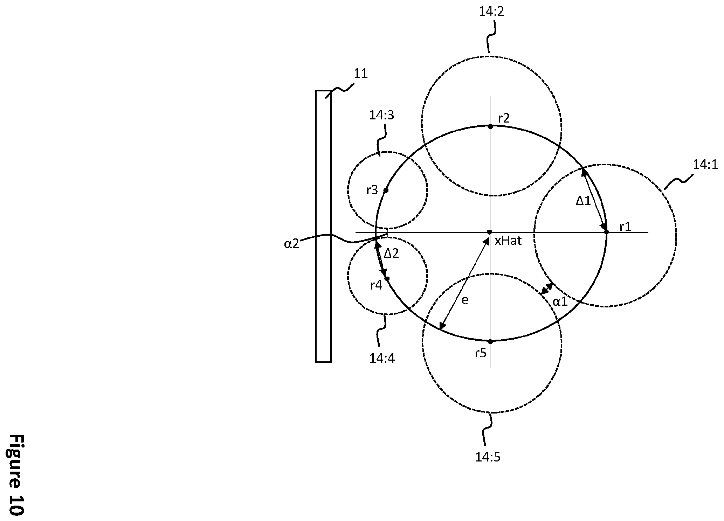

Figure 10 illustrates an embodiment based on that of Figure 9, but where the first safety distance Δ1 and the second safety distance Δ2 have been selected to be smaller to introduce a gap α as previously was discussed with reference to Figures 6 and 8. In this example, a first gap α1 is formed for test points r1, r2, r5 while a slightly smaller second gap α2 is formed for test points r3, r4. As is understood, it is possible to select the test points r1-r5 such that α1 = α2.

Again, if it is ascertained that no obstacle will be encountered that is narrower than the gap α (in this a particular example, not smaller than the smallest of α1 and α2), then there is no risk of an obstacle entering the positioning uncertainty area 13 of the robot 10 and the safety distances Δ1 and Δ2 may indeed be selected such that gaps α1, α1 are formed given that the gaps are smaller than a size of the narrowest obstacle to potentially be encountered.

As previously discussed, if it is assumed that a sensor of the robot 10, such as a camera, has technical limitations in terms of, e.g., resolution, such that the sensor cannot detect obstacles narrower than a certain size, e.g., 10 cm, then the gaps α1, α2 may be set equal to a size of the narrowest obstacle (in this example 10 cm) detectable by the sensor.

Further, assuming that an obstacle narrower than, e.g., 5 cm cannot be represented in the map utilized by the robot 10 when performing SLAM (due to, e.g., limitations in the map format), then again the gaps α1, α2 may be set equal to a width of the narrowest representable obstacle, in this example 5 cm, since in this case it is not possible to represent narrower obstacles than that in the map.

In the exemplifying embodiments illustrated with reference to Figures 3-8, the positioning uncertainty area 13 of the robot 10 is illustrated as being circular.

However, as was discussed hereinabove with reference to Figures 2a-2c, other shapes of the positioning uncertainty area 13 can be envisaged. For instance, the positioning uncertainty area 13 may be an ellipsoid as in Figure 2c, which can be constructed from a covariance matrix of an Extended Kalman Filter. The direction of axis e1 is equal to the eigenvector *v*₁ of the covariance matrix and to attain a 95% confidence ellipsoid, its length should be $\sqrt{\left(5.991{λ}_{1}\right)}$, where *λ*₁ is the first eigenvalue. Similarly, axis e2 is parallel to the other eigenvector of the covariance matrix and has the length $\sqrt{\left(5.991{λ}_{2}\right)}$, where *λ*₂ is the other eigenvalue.

With reference to step S102 where the test points ri are defined, in the case of utilizing an elliptic positioning uncertainty area 13, a first test point r1 can be placed at a random location along the boundary of the positioning uncertainty area 13, then a stepwise move is performed along the boundary until a distance 2Δ is reached from the previous test point, where another test point is placed, and so on, until the first test point r1 is finally reached. The number *N* of test points may be varied, as discussed hereinabove.

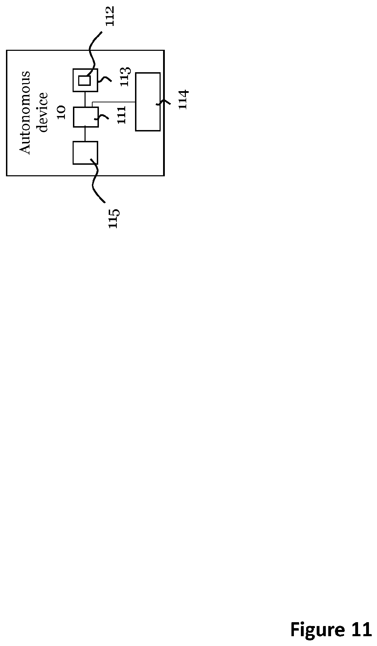

Figure 11 illustrates an autonomous device 10, such as a robot as described in the embodiments hereinabove, configured to navigate an area according to embodiments, where the steps of the method performed by the autonomous device are performed by a processing unit 111 embodied in the form of one or more microprocessors arranged to execute a computer program 112 downloaded to a storage medium 113 associated with the microprocessor, such as a Random Access Memory (RAM), a Flash memory or a hard disk drive. The processing unit 111 is arranged to cause the device 10 to carry out the method according to embodiments when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a Digital Versatile Disc (DVD) or a memory stick. As a further alternative, the computer program 112 may be downloaded to the storage medium 113 over a network. The processing unit 111 may alternatively be embodied in the form of a digital signal processor (DSP), an application specific integrated circuit (ASIC), a field-programmable gate array (FPGA), a complex programmable logic device (CPLD), etc. The device 10 may further comprise a communication interface 114 (wired and/or wireless) over which the device 10 is configured to transmit and receive data. The device 10 may further comprise one or more sensors 115 such as radars, lidars, cameras, sonars, etc., with which obstacles can be detected.

## Claims

1. A method of navigating an autonomous device (10), comprising:
determining (S101) a positioning uncertainty area (13) of the autonomous device (10) with respect to an estimated current position of the autonomous device;
defining (S102) test points (ri) at positions in the positioning uncertainty area (13);
selecting (S103) a circular safety area (14:i) centered at each test point (ri), which circular safety areas (14:i) form a barrier around the positioning uncertainty area (13);
determining (S104), for each test point (ri), a distance and a gradient from a closest obstacle towards said each test point (ri);
determining (S105), for each test point (ri), based on the determined distance and the determined gradient, a set of safe velocities with which the autonomous device (10) is allowed to move without an obstacle entering the safety area (14:i) of said each test point (ri); and
selecting (S106) a safe velocity, with which the autonomous device (10) is allowed to move, within an intersection of the sets of safe velocities determined for all test points (ri).

2. A computer program (112) comprising computer-executable instructions for causing an autonomous device (10) to perform the method of claim 1 when the computer-executable instructions are executed on a processing unit (111) included in the autonomous device (10).

3. An autonomous device (10), the autonomous device (10) comprising a sensor (115) for detecting obstacles, a processing unit (111) and a memory (113), said memory containing instructions (112) executable by said processing unit (111), whereby the autonomous device (10) is operative to:
determine a positioning uncertainty area (13) of the autonomous device (10) with respect to an estimated current position of the autonomous device;
define test points (ri) at positions in the positioning uncertainty area (13);
select a circular safety area (14:i) centered at each test point (ri), which circular safety areas (14:i) form a barrier around the positioning uncertainty area (13);
determine, for each test point (ri), a distance and a gradient from a closest obstacle towards said each test point (ri);
determine, for each test point (ri), based on the determined distance and the determined gradient, a set of safe velocities with which the autonomous device (10) is allowed to move without an obstacle entering the safety area (14:i) of said each test point (ri); and
select a safe velocity, with which the autonomous device (10) is allowed to move, within an intersection of the sets of safe velocities determined for all test points (ri).

4. The autonomous device (10) of claim 3, further being operative to, when determining, for each test point (ri), a distance and a gradient from a closest obstacle towards the said each test point (ri):
deducting, from the computed distance to the closest obstacle, a selected safety distance forming a radius of the safety area (14:i) of said each test point (ri).

5. The autonomous device (10) of claim 4, further being operative to select the same safety distance for all test points.

6. The autonomous device (10) of claim 4, further being operative to select the safety distance such that a boundary of any of the safety areas (14:5) touches a boundary of any adjacent safety area (14:4, 14:6).

7. The autonomous device (10) of claim 4, further being operative to select the safety distance such that a boundary of any of the safety areas (14:5) is separated from a boundary of any adjacent safety area (14:4, 14:6) by a gap.

8. The autonomous device (10) of claim 7, further being operative to select the safety distance such that said gap is smaller than a width of a narrowest obstacle in an area through which the autonomous device (10) navigates.

9. The autonomous device (10) of claim 7, further being operative to select the safety distance such that said gap is equal to a width of a narrowest obstacle detectable by one or more sensors of the autonomous device (10) and/or representable in a map utilized by the autonomous device (10) for navigation.

10. The autonomous device (10) of claim 4, further being operative to select, for each test point, a smaller safety distance for a test point (r3, r4) closer to an obstacle and a greater safety distance for a test point (r1, r2, r5) further away from an obstacle.

11. The autonomous device (10) of claim 10, further being operative to select the smaller safety distance and the greater safety distance such that a boundary of any of the safety areas (14:3) touches a boundary of any adjacent safety area (14:2, 14:4).

12. The autonomous device (10) of claim 10, further being operative to select the smaller safety distance and the greater safety distance such that a boundary of any of the safety areas (14:5) is separated from a boundary of any adjacent safety area (14:4, 14:6) by a gap.

13. The autonomous device (10) of any one of claims 3 to 12, further being operative to omit any determined safe set of velocities for a test point which includes the intersection of all other safe sets of velocities when determining the sets of safe velocities.

14. The autonomous device (10) of any one of claims 3 to 13, further being operative to, when selecting a safe velocity, with which the robotic device (10) is allowed to move, select, within the intersection of the sets of safe velocities determined for all test points (ri), the velocity that is closest to a velocity with which the autonomous device (10) is requested to move.

15. The autonomous device (10) of any one of claims 3 to 14, further being operative to define the test points (ri) at a boundary of the positioning uncertainty area (13).

## Patentansprüche

1. Verfahren zum Navigieren einer autonomen Vorrichtung (10), umfassend:
Bestimmen (S101) eines Positionierungsunsicherheitsbereichs (13) der autonomen Vorrichtung (10) bezüglich einer geschätzten aktuellen Position der autonomen Vorrichtung;
Definieren (S102) von Testpunkten (ri) an Positionen im Positionierungsunsicherheitsbereich (13);
Auswählen (S103) eines kreisförmigen Sicherheitsbereichs (14:i) zentriert um jeden Testpunkt (ri), welche kreisförmigen Sicherheitsbereiche (14:i) eine Barriere um den Positionsunsicherheitsbereich (13) bilden;
Bestimmen (S104), für jeden Testpunkt (ri), eines Abstands und einer Steigung von einem nächstgelegenen Hindernis zu diesem Testpunkt (ri);
Bestimmen (S105), für jeden Testpunkt (ri), basierend auf dem bestimmten Abstand und der bestimmten Steigung, einer Menge sicherer Geschwindigkeiten, mit denen sich die autonome Vorrichtung (10) bewegen darf, ohne dass ein Hindernis in den Sicherheitsbereich (14:i) jedes Testpunkts (ri) gelangt; und
Auswählen (S106) einer sicheren Geschwindigkeit, mit der sich die autonome Vorrichtung (10) innerhalb eines Schnittpunkts der für alle Testpunkte (ri) bestimmten Mengen sicherer Geschwindigkeiten bewegen darf.

2. Computerprogramm (112), das computerausführbare Anweisungen umfasst, um eine autonome Vorrichtung (10) zu veranlassen, das Verfahren nach Anspruch 1 durchzuführen, wenn die computerausführbaren Anweisungen auf einer in der autonomen Vorrichtung (10) beinhalteten Verarbeitungseinheit (111) ausgeführt werden.

3. Autonome Vorrichtung (10), wobei die autonome Vorrichtung (10) einen Sensor (115) zum Erfassen von Hindernissen, eine Verarbeitungseinheit (111) und einen Speicher (113) umfasst, wobei der Speicher Anweisungen (112) enthält, die von der Verarbeitungseinheit (111) ausgeführt werden können, wodurch die autonome Vorrichtung (10) zu Folgendem betriebsfähig ist:
Bestimmen eines Positionierungsunsicherheitsbereichs (13) der autonomen Vorrichtung (10) in Bezug auf eine geschätzte aktuelle Position der autonomen Vorrichtung;
Definieren von Testpunkten (ri) an Positionen im Positionierungsunsicherheitsbereich (13);
Auswählen eines kreisförmigen Sicherheitsbereichs (14:i) zentriert um jeden Testpunkt (ri), welche kreisförmigen Sicherheitsbereiche (14:i) eine Barriere um den Positionsunsicherheitsbereich (13) bilden;
Bestimmen, für jeden Testpunkt (ri), eines Abstands und einer Steigung von einem nächstgelegenen Hindernis zu diesem Testpunkt (ri);
Bestimmen, für jeden Testpunkt (ri), basierend auf dem bestimmten Abstand und der bestimmten Steigung, einer Menge sicherer Geschwindigkeiten, mit denen sich die autonome Vorrichtung (10) bewegen darf, ohne dass ein Hindernis in den Sicherheitsbereich (14:i) jedes Testpunkts (ri) gelangt; und
Auswählen einer sicheren Geschwindigkeit, mit der sich die autonome Vorrichtung (10) innerhalb eines Schnittpunkts der für alle Testpunkte (ri) bestimmten Mengen sicherer Geschwindigkeiten bewegen darf.

4. Autonome Vorrichtung (10) nach Anspruch 3, die ferner zu Folgendem betriebsfähig ist, wenn für jeden Testpunkt (ri) ein Abstand und eine Steigung von einem nächstgelegenen Hindernis zu diesem Testpunkt (ri) bestimmt wird:
Abziehen, von dem berechneten Abstand zu dem nächstgelegenen Hindernis, eines ausgewählten Sicherheitsabstands, der einen Radius des Sicherheitsbereichs (14:i) von jedem Testpunkt (ri) bildet.

5. Autonome Vorrichtung (10) nach Anspruch 4, die ferner betriebsfähig ist, für alle Testpunkte denselben Sicherheitsabstand auszuwählen.

6. Autonome Vorrichtung (10) nach Anspruch 4, die ferner betriebsfähig ist, den Sicherheitsabstand so auszuwählen, dass eine Grenze eines der Sicherheitsbereiche (14:5) eine Grenze eines angrenzenden Sicherheitsbereichs (14:4,14:6) berührt.

7. Autonome Vorrichtung (10) nach Anspruch 4, die ferner betriebsfähig ist, den Sicherheitsabstand so auszuwählen, dass eine Grenze eines der Sicherheitsbereiche (14:5) von einer Grenze eines angrenzenden Sicherheitsbereichs (14:4,14:6) um einen Spalt getrennt ist.

8. Autonome Vorrichtung (10) nach Anspruch 7, die ferner betriebsfähig ist, den Sicherheitsabstand so zu wählen, dass der Spalt kleiner als eine Breite eines schmalsten Hindernisses in einem Bereich ist, durch den die autonome Vorrichtung (10) navigiert.

9. Autonome Vorrichtung (10) nach Anspruch 7, die ferner betriebsfähig ist, den Sicherheitsabstand so auszuwählen, dass der Abstand einer Breite eines schmalsten Hindernisses entspricht, das von einem oder mehreren Sensoren der autonomen Vorrichtung (10) erfasst werden kann und/oder in einer Karte, die von der autonomen Vorrichtung (10) zur Navigation genutzt wird, dargestellt werden kann.

10. Autonome Vorrichtung (10) nach Anspruch 4, die ferner betriebsfähig ist, für jeden Testpunkt einen kleineren Sicherheitsabstand für einen Testpunkt (r3, r4) auszuwählen, der näher an einem Hindernis liegt, und einen größeren Sicherheitsabstand für einen Testpunkt (r1, r2, r5), der weiter von einem Hindernis entfernt ist.

11. Autonome Vorrichtung (10) nach Anspruch 10, die ferner betriebsfähig ist, den kleineren Sicherheitsabstand und den größeren Sicherheitsabstand so auszuwählen, dass eine Grenze eines der Sicherheitsbereiche (14:3) eine Grenze eines angrenzenden Sicherheitsbereichs (14:2, 14:4) berührt.

12. Autonome Vorrichtung (10) nach Anspruch 10, die ferner betriebsfähig ist, den kleineren Sicherheitsabstand und den größeren Sicherheitsabstand so auszuwählen, dass eine Grenze eines der Sicherheitsbereiche (14:5) von einer Grenze eines angrenzenden Sicherheitsbereichs (14:4, 14:6) um einen Spalt getrennt ist.

13. Autonome Vorrichtung (10) nach einem der Ansprüche 3 bis 12, die ferner betriebsfähig ist, beim Bestimmen der Mengen sicherer Geschwindigkeiten jede bestimmte sichere Menge von Geschwindigkeiten für einen Testpunkt auszulassen, der den Schnittpunkt aller anderen sicheren Mengen von Geschwindigkeiten beinhaltet.

14. Autonome Vorrichtung (10) nach einem der Ansprüche 3 bis 13, die ferner betriebsfähig ist, beim Auswählen einer sicheren Geschwindigkeit, mit der die Robotervorrichtung (10) sich bewegen darf, innerhalb der Schnittmenge der für alle Testpunkte (ri) bestimmten Mengen sicherer Geschwindigkeiten die Geschwindigkeit auszuwählen, die einer Geschwindigkeit am nächsten kommt, mit der sich die autonome Vorrichtung (10) bewegen soll.

15. Autonome Vorrichtung (10) nach einem der Ansprüche 3 bis 14, die ferner betriebsfähig ist, die Testpunkte (ri) an einer Grenze des Positionierungsunsicherheitsbereichs (13) zu definieren.

## Revendications

1. Procédé de navigation d'un dispositif autonome (10), comprenant :
la détermination (S101) d'une zone d'incertitude de positionnement (13) du dispositif autonome (10) par rapport à une position courante estimée du dispositif autonome ;
la définition (S102) de points de test (ri) à des positions dans la zone d'incertitude de positionnement (13) ;
la sélection (S103) d'une zone de sécurité circulaire (14:i) centrée à chaque point de test (ri), lesquelles zones de sécurité circulaires (14:i) forment une barrière autour de la zone d'incertitude de positionnement (13) ;
la détermination (S104), pour chaque point de test (ri), d'une distance et d'une pente à partir d'un obstacle le plus proche vers chaque dit point de test (ri) ;
la détermination (S105), pour chaque point de test (ri), sur la base de la distance déterminée et de la pente déterminée, d'un ensemble de vitesses sûres auxquelles le dispositif autonome (10) est autorisé à se déplacer sans qu'un obstacle ne pénètre dans la zone de sécurité (14:i) de chaque dit point de test (ri) ; et
la sélection (S106) d'une vitesse sûre, à laquelle le dispositif autonome (10) est autorisé à se déplacer, dans une intersection des ensembles de vitesses sûres déterminées pour tous les points de test (ri).

2. Programme informatique (112) comprenant des instructions exécutables par ordinateur pour amener un dispositif autonome (10) à réaliser le procédé selon la revendication 1 lorsque les instructions exécutables par ordinateur sont exécutées sur une unité de traitement (111) incluse dans le dispositif autonome (10).

3. Dispositif autonome (10), le dispositif autonome (10) comprenant un capteur (115) pour détecter des obstacles, une unité de traitement (111) et une mémoire (113), ladite mémoire contenant des instructions (112) exécutables par ladite unité de traitement (111), selon lequel le dispositif autonome (10) permet de :
déterminer une zone d'incertitude de positionnement (13) du dispositif autonome (10) par rapport à une position courante estimée du dispositif autonome ;
définir des points de test (ri) à des positions dans la zone d'incertitude de positionnement (13) ;
sélectionner une zone de sécurité circulaire (14:i) centrée à chaque point de test (ri), lesquelles zones de sécurité circulaires (14:i) forment une barrière autour de la zone d'incertitude de positionnement (13) ;
déterminer, pour chaque point de test (ri), une distance et une pente à partir d'un obstacle le plus proche vers chaque dit point de test (ri) ;
déterminer, pour chaque point de test (ri), sur la base de la distance déterminée et de la pente déterminée, un ensemble de vitesses sûres auxquelles le dispositif autonome (10) est autorisé à se déplacer sans qu'un obstacle ne pénètre dans la zone de sécurité (14:i) de chaque dit point de test (ri) ; et
sélectionner une vitesse sûre, à laquelle le dispositif autonome (10) est autorisé à se déplacer, dans une intersection des ensembles de vitesses sûres déterminées pour tous les points de test (ri).

4. Dispositif autonome (10) selon la revendication 3, permettant en outre, lors de la détermination, pour chaque point de test (ri), d'une distance et d'une pente à partir d'un obstacle le plus proche vers chaque dit point de test (ri) :
de déduire, à partir de la distance calculée jusqu'à l'obstacle le plus proche, une distance de sécurité sélectionnée formant un rayon de la zone de sécurité (14:i) de chaque dit point de test (ri).

5. Dispositif autonome (10) selon la revendication 4, permettant en outre de sélectionner la même distance de sécurité pour tous les points de test.

6. Dispositif autonome (10) selon la revendication 4, permettant en outre de sélectionner la distance de sécurité de sorte qu'une limite de l'une quelconque des zones de sécurité (14:5) touche une limite d'une quelconque zone de sécurité adjacente (14:4, 14:6).

7. Dispositif autonome (10) selon la revendication 4, permettant en outre de sélectionner la distance de sécurité de sorte qu'une limite de l'une quelconque des zones de sécurité (14:5) soit séparée d'une limite d'une quelconque zone de sécurité adjacente (14:4, 14:6) par un écart.

8. Dispositif autonome (10) selon la revendication 7, permettant en outre de sélectionner la distance de sécurité de sorte que ledit écart soit plus petit qu'une largeur d'un obstacle le plus étroit dans une zone à travers laquelle le dispositif autonome (10) navigue.

9. Dispositif autonome (10) selon la revendication 7, permettant en outre de sélectionner la distance de sécurité de sorte que ledit écart soit égal à une largeur d'un obstacle le plus étroit détectable par un ou plusieurs capteurs du dispositif autonome (10) et/ou représentable sur une carte utilisée par le dispositif autonome (10) pour la navigation.

10. Dispositif autonome (10) selon la revendication 4, permettant en outre de sélectionner, pour chaque point de test, une distance de sécurité plus petite pour un point de test (r3, r4) plus proche d'un obstacle et une distance de sécurité plus grande pour un point de test (r1, r2, r5) plus éloigné d'un obstacle.

11. Dispositif autonome (10) selon la revendication 10, permettant en outre de sélectionner la distance de sécurité plus petite et la distance de sécurité plus grande de sorte qu'une limite de l'une quelconque des zones de sécurité (14:3) touche une limite d'une quelconque zone de sécurité adjacente (14:2, 14:4).

12. Dispositif autonome (10) selon la revendication 10, permettant en outre de sélectionner la distance de sécurité plus petite et la distance de sécurité plus grande de sorte qu'une limite de l'une quelconque des zones de sécurité (14:5) soit séparée d'une limite d'une quelconque zone de sécurité adjacente (14:4, 14:6) par un écart.

13. Dispositif autonome (10) selon l'une quelconque des revendications 3 à 12, permettant en outre d'omettre un quelconque ensemble sûr déterminé de vitesses pour un point de test qui inclut l'intersection de tous les autres ensembles sûrs de vitesses lors de la détermination des ensembles de vitesses sûres.

14. Dispositif autonome (10) selon l'une quelconque des revendications 3 à 13, permettant en outre, lors de la sélection d'une vitesse sûre à laquelle le dispositif robotique (10) est autorisé à se déplacer, de sélectionner, dans l'intersection des ensembles de vitesses sûres déterminées pour tous les points de test (ri), la vitesse qui est la plus proche d'une vitesse à laquelle il est demandé au dispositif autonome (10) de se déplacer.

15. Dispositif autonome (10) selon l'une quelconque des revendications 3 à 14, permettant en outre de définir les points de test (ri) à une limite de la zone d'incertitude de positionnement (13).
